# EUROPEAN PATENT APPLICATION

(11) **EP 2 183 965 A1**
(43) Date of publication of application: **12.05.2010**
(21) Application number: 09174743.6
(22) Date of filing: 02.11.2009
(51) Int. Cl.: A01K 1/01

(54) **Manure vehicle**

(30) Priority: 11.11.2008 NL 2002200
(71) Applicant: J.O.Z. B.V., 1617 KK Westwoud (NL)
(72) Inventor: Elling, Rick, 1617 KK, Westwoud (NL)
(74) Representative: Hooiveld, Arjen Jan Winfried

(57) **Abstract**

An unmanned manure vehicle (5), which vehicle comprises drive means for driving the vehicle and orientation means for following a path on a floor (1) of a cattle shed, said manure vehicle being provided with a manure slide (6) for moving manure present on the floor to a desired location in the cattle shed, a special feature being the fact that the manure vehicle is provided with disinfecting and/or cleaning means (8) for disinfecting and/or cleaning the floor, which disinfecting and/or cleaning means are mounted on a side of the manure vehicle that faces the manure slide.

## Description

The invention relates to an unmanned manure vehicle, which vehicle comprises drive means for driving the vehicle and orientation means for following a path on a floor of a cattle shed, said manure vehicle being provided with a manure slide for moving manure present on the floor to a desired location in the cattle shed. Although the present vehicle is in principle suitable both for indoor use and for outdoor use (for example in a meadow), the vehicle is in particular intended for use in a cattle shed. The path to be followed is in that case located inside the cattle shed.

Such a manure vehicle is known from Dutch patent No. 1 008 612 in the name of the present Applicant. The unmanned manure vehicle described therein is a vehicle which moves autonomously in an aisle of the cattle shed, and which is driven via a live wire netting installed in the cattle shed, under which the vehicle moves. The supply voltage is taken off by means of a sliding contact against the wire netting. The known manure vehicle is equipped with a manure slide, for example in the form of a combination slide, a grid slide, a folding slide, or a slotted slide for moving the manure present in the aisle to a desired location in the cattle shed. The vehicle known from the aforesaid Dutch patent publication must move according to a route plan, to which end means for determining the position of the vehicle inside the cattle shed are provided.

A drawback of the known manure a vehicle is the fact that it does not sufficiently meet the current requirements of hygiene.

It is the object of the invention to present an unmanned manure vehicle which is capable of moving autonomously whilst obviating the aforesaid drawback of the prior art.

In order to accomplish that object, an unmanned manure vehicle of the kind described in the first paragraph is **characterised in that** the manure vehicle is provided with disinfecting and/or cleaning means for disinfecting and/or cleaning the floor, which disinfecting and/or cleaning means are mounted on a side of the manure vehicle that faces the manure slide. By having the unmanned vehicle move autonomously according to a predetermined path through the cattle shed, manure can be shoved away from an aisle in the cattle shed, for example to a manure pit, by means of the manure slide, whilst the floor of the cattle shed at the location of the aisle can subsequently be disinfected and/or cleaned. Preferably, the unmanned manure vehicle is provided with disinfecting and/or cleaning means for disinfecting and/or cleaning the floor not only at the front side but also at the rear side, which means are mounted on a side of the manure vehicle that faces away from the manure slide.

In a preferred embodiment of an unmanned manure vehicle according to the invention, the disinfecting and/or cleaning means comprise a spray nozzle. Thus, disinfecting and/or cleaning liquid stored in a reservoir in the unmanned manure vehicle is sprayed onto the floor of the cattle shed via the spray nozzle.

In another preferred embodiment of an unmanned manure vehicle according to the invention, the disinfecting and/or cleaning means that face the manure slide are connected to a reservoir containing at least one substance selected from the group consisting of water, a disinfecting and/or cleaning agent and an ammonia-reducing agent.

In another preferred embodiment of an unmanned manure vehicle according to the invention, the disinfecting and/or cleaning means that face away from the manure slide are connected to a reservoir containing at least one substance selected from the group consisting of water, a disinfecting and/or cleaning agent and an ammonia-reducing agent. Furthermore, a substance having a cleaning effect on hooves of the cattle in the cattle shed may be added.

The reservoir that is mounted on or in the unmanned manure vehicle can preferably be filled by means of a central filling station in or near the cattle shed.

In another preferred embodiment of an unmanned manure vehicle according to the invention, the orientation means comprise a receiver for receiving data signals for the purpose of determining a position of the unmanned manure vehicle in the cattle shed. More in particular, said orientation means furthermore comprise a computer with comparison means for comparing a position of the unmanned manure vehicle in the cattle shed with a predetermined route in the cattle shed, wherein the unmanned manure vehicle can be controlled by the computer via the comparison means to follow a path in the cattle shed.

In another preferred embodiment of a manure vehicle according to the invention, the position data signals are GPS signals from a satellite. In another preferred embodiment, the position data signals are signals from a transmitter disposed near the floor.

The unmanned manure vehicle according to the invention may comprise a bumper at least partially surrounding the unmanned manure vehicle, whilst the driving means may comprise an electric motor.

The invention will now be explained in more detail with reference to figures of a drawing, in which:
- Figure 1 is a schematic, perspective view of the present unmanned manure vehicle in a cattle shed;
- Figure 2 is a schematic, perspective view of a spray nozzle used in the unmanned manure vehicle of figure 1;
- Figure 3 is a schematic cross-sectional view of figure 1; and
- Figure 4 is a detail view of the rear side of the unmanned manure vehicle of figure 1.

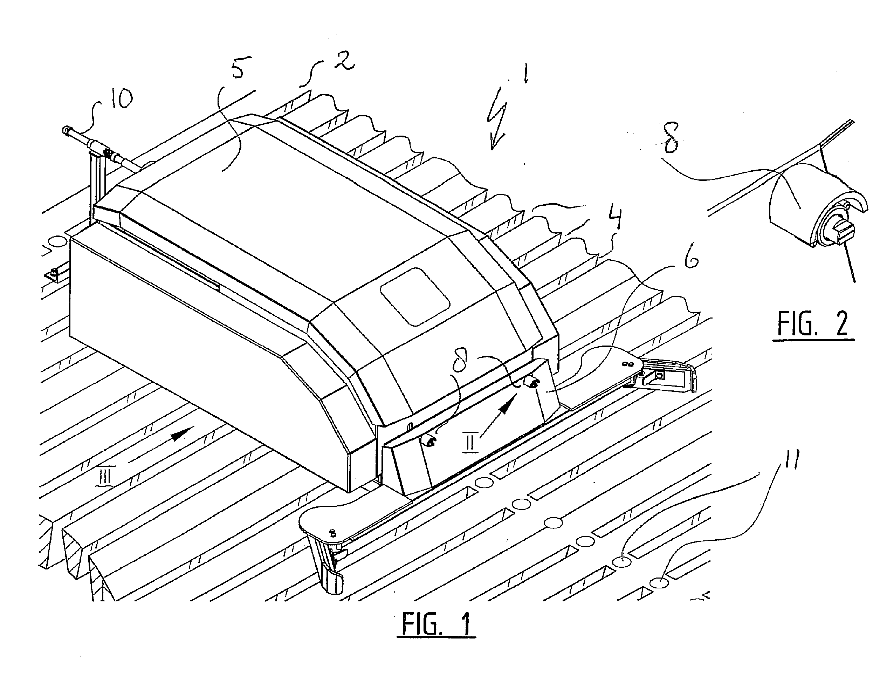

Figure 1 shows a cattle shed floor 1 consisting of several plate-shaped floor elements 2 of reinforced concrete. The elongated floor elements 2 are supported with their short sides on vertical side walls of a manure cellar 3 located under the cattle shed, and abut against each other with their long sides, without any intermediate spaces present therebetween. To provide a proper grip for cattle that walk on the shed floor 1, the upper surface of each floor element 2 is provided with mutually parallel grooves 4. The grooves 4 of the floor elements 2 are in line with each other, so that an unmanned, electric motor-driven manure vehicle 5 according to the invention provided with a manure slide 6 can freely move across the entire shed floor 1. Each groove 4 is provided with several holes 7 formed in the bottom thereof, which holes open into the manure cellar 3. As a result of the forward and backward movement of the manure slide 6, manure present in the grooves 4 can find its way into the manure cellar 3 via the holes 7. The shape and the dimensions of the holes 7 have been precisely determined upon production of the concrete floor elements 2, such that the manure cannot obstruct the holes 7 and the emission of ammonia through said holes is strongly reduced in comparison with existing shed floors. In order to further reduce the emission of ammonia, the holes 7 diverge in the direction of the manure cellar 3, seen in cross-sectional view. Said downwardly diverging holes 7 thus keep ammonia retained in the manure cellar, as it were, which (as already said before) leads to a further ammonia reduction. In addition to the use of the manure slide 6, use may be made of water that is squirted into the grooves 4 under high pressure so as to remove manure from said grooves 4, via the holes 7, into the manure cellar 3. The thickness of the floor elements 2 is about 150 mm, whilst the grooves are spaced 130 mm apart, measured from their respective central axes. The grooves 4 have a width of about 30 mm and a depth of about 30 mm.

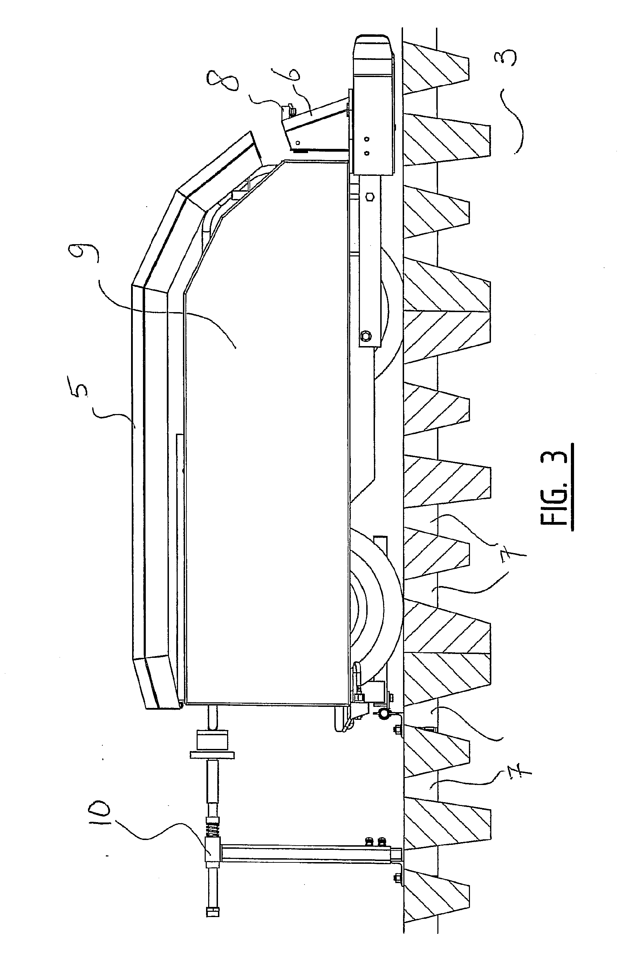

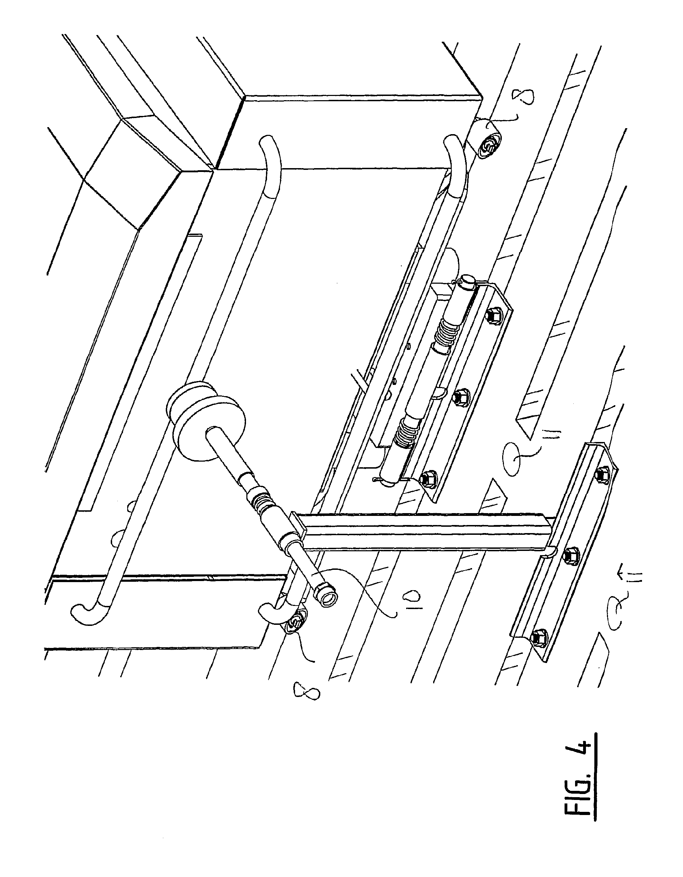

With reference to figures 2-4, the unmanned manure vehicle 5 is provided with disinfecting and/or cleaning means in the form of spray nozzles 8 both at the front side and at the rear side for disinfecting and/or cleaning the floor. The spray nozzles 8 are connected to a reservoir 9 in the unmanned manure vehicle 5, said reservoir in use being filled with a substance selected from the group consisting of water, a disinfecting and/or cleaning agent and an ammonia-reducing agent.

The reservoir 9 can be filled by means of a central filling station in or near the cattle shed, making use of a central connection 10.

The orientation means in the unmanned manure vehicle 5 comprise a receiver for receiving data signals for the purpose of determining a position of the unmanned manure vehicle 5, said data signals being signals from a transmitter 11 disposed near the floor. As already said before, the orientation means further comprise a computer with comparison means for comparing a position of the unmanned manure vehicle 5 with a predetermined route or path, wherein the unmanned manure vehicle can be controlled by the computer, via the comparison means, to follow a path.

The invention is not limited to the embodiment as shown, but it also extends to other preferred variants that fall within the scope of the appended claims.

## Claims

1. An unmanned manure vehicle, which vehicle comprises drive means for driving the vehicle and orientation means for following a path on a floor of a cattle shed, said manure vehicle being provided with a manure slide for moving manure present on the floor to a desired location in the cattle shed, **characterised in that** the manure vehicle is provided with disinfecting and/or cleaning means for disinfecting and/or cleaning the floor, which disinfecting and/or cleaning means are mounted on a side of the manure vehicle that faces the manure slide.

2. An unmanned manure vehicle according to claim 1, wherein the unmanned manure vehicle is provided with disinfecting and/or cleaning means for disinfecting and/or cleaning the floor, which means are mounted on a side of the manure vehicle that faces away from the manure slide.

3. An unmanned manure vehicle according to claim 1 or 2, wherein the disinfecting and/or cleaning means comprise a spray nozzle.

4. An unmanned manure vehicle according to claim 1, 2 or 3, wherein the disinfecting and/or cleaning means that face the manure slide are connected to a reservoir containing at least one substance selected from the group consisting of water, a disinfecting and/or cleaning agent and an ammonia-reducing agent.

5. An unmanned manure vehicle according to any one of the preceding claims 1-4, wherein the disinfecting and/or cleaning means that face away from the manure slide are connected to a reservoir containing at least one substance selected from the group consisting of water, a disinfecting and/or cleaning agent and an ammonia-reducing agent.

6. An unmanned manure vehicle according to claim 4 or 5, wherein said reservoir can preferably be filled by means of a central filling station in or near the cattle shed.

7. An unmanned manure vehicle according to claim 4, 5 or 6, wherein said reservoir is mounted on or in the unmanned manure vehicle.

8. An unmanned manure vehicle according to any one of the preceding claims 1-7, wherein the orientation means comprise a receiver for receiving data signals for the purpose of determining a position of the unmanned manure vehicle.

9. An unmanned manure vehicle according to claim 8, wherein said orientation means furthermore comprise a computer with comparison means for comparing a position of the unmanned manure vehicle with a predetermined route or path, and wherein the unmanned manure vehicle can be controlled by the computer via the comparison means to follow a path.

10. An unmanned manure vehicle according to claim 8 or 9, wherein the position data signals are GPS signals from a satellite.

11. An unmanned manure vehicle according to claim 8 or 9, wherein said position data signals are signals from a transmitter disposed near the floor.
